Europäisches Patentamt

(19) European Patent Office

Office européen des brevets

(11) Numéro de publication: **0 270 411**
**B1**

(12) **FASCICULE DE BREVET EUROPEEN**

(45) Date de publication du fascicule du brevet:
14.11.90

(51) Int. Cl.⁵: **B29C 67/14**

(21) Numéro de dépôt: 87402479.7

(22) Date de dépôt: 03.11.87

(54) Structure textile permettant la réalisation d'articles stratifiés composites par moulage par injection.

(30) Priorité: 05.11.86 FR 8615425

(43) Date de publication de la demande:
08.06.88 Bulletin 88/23

(45) Mention de la délivrance du brevet:
14.11.90 Bulletin 90/46

(84) Etats contractants désignés:
AT BE CH DE ES FR GB GR IT LI LU NL SE

(56) Documents cités:
EP-A- 0 138 294
FR-A- 1 327 581
FR-A- 2 160 591
FR-A- 2 442 123
US-A- 2 913 036

COMPOSITES,
vol. 25, no. 3, mai-juin 1985, pages 69-77, Paris FR; P. LISSAC: "Nappes ou tissu"
KUNSTSTOF & RUBBER,
vol. 39, no. 5, mai 1986, pages 16-19, Amsterdam, NL; K. VAN HARTEN: "Vezelversterkte Kunststoffen"
PLASTVERARBEITER,
vol. 35, no. 6, juin 1984, pages 85-88, Speyer, DE; G. WIEDEMANN et al.: "Anwendungen mit Glasseiden-Flächengebilden"

(73) Titulaire: BROCHIER S.A., 33 Avenue Franklin Roosevelt B.P. 272, F-69152 Décines Charpieu Cédex(FR)

(72) Inventeur: Bompard, Bruno, 23 rue de Montbrilliand, F-69003 Lyon(FR)
Inventeur: Aucagne, Jean, Rochetoirin, F-38110 La Tour Du Pin(FR)
Inventeur: Lapresle, Bernard, 9 rue Molière, F-69006 Lyon(FR)

(74) Mandataire: Phélip, Bruno et al, c/o Cabinet Harlé & Phélip 21, rue de La Rochefoucauld, F-75009 Paris(FR)

(56) Documents cités: (suite)
PLASTVERARBEITER,
vol. 35, no. 7, juillet 1984, pages 72-74, Speyer, DE; G. WIEDEMANN et al.: "Anwendungen mit Glasseiden-Flächengebilden"
PLASTVERARBEITER,
vol. 35, no. 8, août 1984, pages 74-77, Speyer, DE; G. WIEDEMANN et al.: "Anwendungen mit Glasseiden-Flächengebilden"

## Description

La présente invention concerne un procédé pour l'obtention d'articles stratifiés composites par la technique de moulage par injection et plus particulièrement par injection sous vide. Elle a également pour objet une structure textile pour la mise en œuvre de ce procédé ainsi que les articles obtenus incorporant une telle structure.

D'une manière générale, les technologies de transformation permettant la réalisation d'articles stratifiés (ou composites), c'est-à-dire de matériaux à base d'une résine avec renfort textile, peuvent se regrouper en deux grandes catégories, à savoir:

a) celles permettant la réalisation de pièces à grandes cadences; elles font principalement appel à des résines type polyesters ou thermoplastiques, renforcées de fibres courtes et mises en œuvre par compression, injection, estampage, et autres;

b) celles permettant la réalisation de pièces à petites cadences, utilisant des structures textiles type nappes, tissus, mats et mises en œuvre par moulage en autoclave, par contact, sous vide, et autres techniques de moulage connues.

Parmi les technologies de type (b), les procédés dits "au contact" sont souvent de fiabilité et de reproductibilité relativement limitées et ils sont en outre fortement polluants.

Il est à noter également que la part main-d'œuvre dans les technologies de type (b) est une composante importante du coût final de la pièce.

Toutefois, les technologies de type (b) conduisent globalement à des pièces aux performances mécaniques supérieures à celles de pièces réalisées par un procédé à cadence élevée de type (a).

Il y a donc opposition entre propriétés mécaniques et cadences de production et, dans l'état actuel de la technique, aucun compromis satisfaisant n'a pu être trouvé entre ces deux impératifs opposés. L'évolution du marché des composites conduit à une demande de technologies et de matériaux permettant la fabrication de pièces de hautes caractéristiques et à cadences de production suffisamment élevées.

Depuis quelques années, notamment dans le domaine des industries du sport et des loisirs, il a été proposé de réaliser des pièces moulées en grandes séries selon la technique dite "par injection", en utilisant notamment comme structures textiles de renforcement, des mats de verre et comme résines, des résines polyester. Une telle technologie présente comme avantage de nécessiter des investissements modérés, de permettre des cadenses de production élevées, d'être facilement automatisable, non polluante et d'avoir une bonne reproductibilité et fiabilité des résultats. Si cette technique donne satisfaction dans le cas où l'on souhaite réaliser des pièces présentant des propriétés mécaniques relativement peu élevées, en revanche, lorsque l'on souhaite réaliser des pièces à très grande résistance, c'est-à-dire comportant une forte teneur en structure textile de renforcement, il a été constaté qu'il était difficile, voire impossible de la mettre en œuvre, les renforts textiles formant en quelque sorte une barrière empêchant la circulation de la résine et ne permettant donc pas d'avoir une imprégnation totale et homogène.

A titre de référence illustrant l'état de la technique dans le domaine du moulage sous vide avec injection de résine, on peut citer le brevet US-A 2 913 036, qui a pour objet un procédé de fabrication d'articles de grandes dimensions, tels que des réservoirs ou des piscines. Pour favoriser la mise en place de la résine dans le moule, il est proposé de créer un réseau de tubes perforés assurant la distribution de la résine liquide de manière plus homogène au sein de l'article en cours de moulage. Ce brevet décrit donc une technique ancienne de moulage du type venant d'être décrit, qui es inapplicable pour la fabrication de matériaux composites comportant un empilement de renforts textiles. Les problèmes techniques posés, dans ce cas, lors de l'injection de la résine, sont complètement différents, surtout si l'on désire en même temps obtenir des cadences de fabrication suffisantes à l'échelle industrielle.

Pour résoudre ces problèmes, diverses solutions ont été proposées, consistant soit à injecter la résine sous forte pression, soit à la rendre très fluide pour faciliter sa pénétration, soit à utiliser les deux méthodes cumulativement. Il a également été proposé d'adapte les renforts textiles, par exemple en traitant chimiquement les fibres ou les renforts, réalisant une préimprégnation des différentes couches de renfort, en maintenant les filaments élémentaires des fils des tissus de renfort aussi plats et parallèles les uns aux autres que possibles, voire même en réalisant des structures perforées.

Si les solutions proposées permettent d'obtenir des résultats satisfaisants, il convient cependant de noter que, généralement, cela est au détriment d'un ou de plusieurs paramètres intéressants de la technique de moulage par injection renforts plus complexes, résine peu performante, investissement élevé....).

On connaît également le brevet FR 1 327 581 qui est relatif à un procédé pour réaliser de articles stratifiés composites par la technique générale de moulage par injection. Ce procédé consiste à disposer dans un moule au moins une couche de matière fibreuse de renforcement, à disposer contre cette ou ces couches de matière fibreuse de renforcement une matière d'entretoisement, à introduire une résine dans le moule, puis à laisser la résine durcir suffisament pour qu'on puisse démouler l'article obtenu. La matière d'entretoisement présente une structure telle qu'elle oppose à la pénétration de la résine dans le moule moins de résistance que la matière fibreuse de renforcement.

Ce procédé est censé permettre d'améliorer l'écoulement de la résine dans la matière fibreuse de renforcement. Toutefois, il nécessite l'introduction, dans l'empilement de couches de matière fibreuse de renforcement, d'une couche d'une matière supplémentaire, à savoir la matière d'entretoisement, qui est de nature différente de la matière fibreuse. Ceci entraine un surcroit de prix important et surtout une diminution des propriétés mécaniques de l'article final par rapport à un article ne comportant que des couches de matière fibreuse de renforcement.

Ainsi, ce procédé connu ne conviendrait pas à la fabrication de pièces à très grande résistance.

Or, on a trouvé un procédé pour l'obtention d'articles composites par la technique de moulage par injection, qui permet de surmonter ces inconvénients en évitant l'utiliation de matériau supplémentaire pour favoriser l'injection de la résine.

Selon ce procédé, on dispose dans un moule de forme correspondant à celle de l'article à obtenir, un empilement de couches de renforts textiles à base de fibres techniques telles que verre, carbone, carbure de silicium, aramide, bore et autres et, après fermeture du moule, on y injecte une résine, dans au moins une direction.

Selon l'invention, on utilise un empilement de couches ne comportant pas d'autre(s) couche(s) que celle(s) destinée(s) au renfort, au moins unes desdites couches de renfort ayant une structure telle qu'au moins dans une de ses directions correspondant à celle de l'injection de la résine, elle forme des canaux facilitant l'écoulement de la résine lors de l'injection.

Ces canaux se maintiennent dans leur état initial jusqu'à imprégnation totale de l'empilement de renforts textiles par la résine injectée. Ainsi, l'imprégnation est plus rapide et plus homogène que dans les procédés connus d'injection.

Dans le cas de l'utilisation de la technique d'injection sous vide, l'injection de résine peut se faire, en fonction de la géométrie de la pièce à réaliser, soit par un conduit périphérique continu entourant la pièce, l'aspiration étant produite dans la partie centrale, de telle sorte que l'imprégnation du renfort textile se fasse simultanément de tous les côtés, depuis la périphérie en allant vers le centre (une variante consiste à injecter la résine au centre de la pièce et à tirer le vide sur le pourtour de la pièce), soit par injection à une extrémité, le vide se faisant à l'autre extrémité.

Dans la présente description, on a utilisé l'expression "canaux" pour caractériser l'écoulement de la résine lors de l'injeciton dans l'empilement de renforts textiles. L'homme du métier comprendra que toute expression équivalente pourrait être utilisée, telle que "passages préférentiels", "couloirs", drains qui définissent une topographie ou structure capable de procurer un écoulement guidé de résine dans au moins une direction.

Les canaux sont juxtaposés (ou adjacents) ou bien séparés les uns des autres au sein de la couche de renfort textile. Ils peuvent être rectilignes ou sensiblement rectilignes ou courbes en épousant alors la forme de la pièce finale à obtenir. La forme des canaux doit en effet être adaptée à celle du renfort textile, lequel peut être un empilement en couches superposées sensiblement planes ou comporter des composants textiles en forme, tels que des composants spirales ou coniques. De même, les canaux peuvent être sensiblement parallèles entre eux ou non, selon la forme des composants du renfort textile.

Lesdits canaux sont continus. Ils peuvent être formés en utilisant des fils de forme hélicoïdale, tels que des fils guipés ou tordus et/ou des fils ayant un état de surface appropriée, tels approprié, que des fils polymérisés, préimprégnés ou hybrides.

Ainsi, les canaux peuvent être obtenus soit par la géométrie de fils tordus ou guipés, soit par la géométrie de la section des fils eux-mêmes, polymérisés, préimprégnés ou hybrides.

Selon la présente description et comme cela est connu de l'homme du métier, un fil polymérisé est un fil revêtu ou imprégné d'une substance se trouvant déjà à l'état polymérisé alors qu'un fil préimprégné est un fil revêtu ou imprégné d'une substance ne se trouvant pas encore à son état final de polymérisation, celui-ci n'étant atteint qu'à la fin du processus de fabrication de la pièce composite. Par fils hybrides, on entend des fils comprenant des composants de nature différente, par exemple des fils de carbone, guipés avec un fil polyester ou avec plusieurs fils entrelacés.

Les fils guipés peuvent comporter un guipage simple (à un fil) ou multiple, par exemple avec deux fils entrelacés. Egalement les fils peuvent comporter une tresse de guipage externe.

Selon l'invention, la nature des fils n'est nullement critique et doit simplement être choisie selon les besoins techniques de la pièce finale à fabriquer. En général, on utilise des fils constitués de fibres techniques telles que verre, carbone, carbure de silicium, aramide, bore et autres, seules ou en combinaison, mais on peut aussi utiliser des fils métalliques, par exemple d'aluminium. Les fils en question peuvent être mis en œuvre en tant que tels ou après avoir subi divers traitements connus de l'homme du métier.

Pour les besoins de l'invention, on peut donc utiliser les fils les plus variés et réaliser les canaux dans au moins une couche de renfort de l'empilement en mettant en place des fils de natures et formes très différentes, par exemple des formes hélicoïdales, rondes ou sensiblement rondes.

Les canaux peuvent être formés, non seulement dans l'épaisseur de la couche de renfort, mais aussi sur chacune de ses faces, ce qui permet l'imprégnation d'une ou plusieurs couches adjacentes de l'empilement.

Les canaux permettent donc, de par leur géométrie, un écoulement de résine dans le sens de l'injection aussi bien que dans l'épaisseur de la couche considérée, pour imprégner les couches adjacentes.

L'invention est également relative à une structure textile pour la mise en œuvre du procédé d'obtention d'articles composites.

Dans une forme préférée de réalisation, une structure textile selon l'invention est telle qu'au moins une des couches de l'empilement de renforts textiles est réalisée à partir d'un tissu chaîne et trame dans lequel au moins une partie des fils de chaîne et/ou de trame ont, soit reçu une torsion suffisante permettant, lorsque le tissu est réalisé, d'obtenir un canal entre deux fils consécutifs, soit été guipés avec au moins un fil additionnel c'est-à-dire d'un fil enroulé à la périphérie des brins élémentaire sous la forme d'une hélice, le guipage étant bien entendu réalisé de préférence de manière non jointive pour obtenir également le canal désiré.

De préférence, l'ensemble des fils de chaîne et de trame de la couche considérée auront la configuration précitée, mais on peut réaliser des tissus présentant, en chaîne et/ou en trame, une alternance de fils ainsi tordus (ou guipés) avec des fils non tordus (ou non guipés).

L'homme du métier comprendra que, lorsque dans la présente description, il est question de tissus à chaîne et trame, les orientations relatives de la chaîne et de la trame peuvent être variées et quelconques, par exemple 0,90° + 45°, - 45°, ou + 60°, - 60°, et autres.

Eventuellement, au lieu de tissus, on peut utiliser une structure tricotée ou une structure non tissée, à condition qu'elle présente des canaux conformément à l'invention. De même, si les renforts peuvent être constitués de couches élémentaires empilées, l'invention peut être appliquée aux structures épaisses constituées de nappes parallèles, liées entre elles, par exemple par tissage, par tricotage, couture... . De plus, dans le cas de pièces de forme complexe, on peut répartir des canaux (densité, largeur) pour que l'injection se fasse de manière homogène au travers de tout le renfort.

D'autres variantes, conformes à l'invention, consistent:
- soit en l'utilisation de rubans unidirectionnels chaîne (ou trame) ou de nappes unidirectionnelles avec, par exemple, uniquement des fils de chaîne et pas de fils de trame, mais comportant des passages préférentiels formant des canaux permettant l'écoulement de la résine;
- soit en la dépose de fils unitaires (par exemple au moyen de machine de nappage ou d'enroulement filamentaire) entre des couches de renforts textiles classiques, ces fils unitaires créant des pasages préférentiels formant des ca naux permettant l'écoulement de la résine.

Ainsi, la structure textile de l'invention peut être réalisée en utilisant des tissus préconstitués (avec des fils chaîne et/ou trame tels que définis précédémment) ou des composants unidirectionnels (rubans ou nappes), qui sont mis en place dans un empilement de couches textiles de renfort. Mais on peut aussi réaliser in situ une structure conforme à l'invention en disposant des fils entre les couches de renfort d'un empilement en cours de mise en place.

L'homme du métier comprendra que l'invention peut être appliquée à des structures textiles très diverses parmi lesquelles on peut citer:
- des renforts plans à structures monocouches tissées, tricotées ou à nappes unidirectionnelles ou multidirectionnelles, avec ou sans embuvage;
- des renforts plans à structures multicouches épaisses formées de couches empilées et maintenues entre elles;
- des renforts non plans et ayant une forme adaptée à la pièce finale à fabriquer, à structures monocouches ou multicouches, telles que définies ci-dessus.

L'invention peut être utilisée aussi pour faciliter l'imprégnation de structures textiles particulières, par exemple épaisses, pour obtenir des préimprégnés avec des résines classiquement utilisées dans ces procédés. Cette imprégnation peut se réaliser par injection ou par d'autres techniques d'imprégnation.

Egalement, l'invention peut être appliquée à d'autres procédés que l'injection sous vide et, d'une manière générale dans tous les cas où l'on souhaite avoir un très bon écoulement de résine à l'intérieur d'une structure textile de renforcement.

Sous un autre aspect, l'invention a également pour objet les pièces finales composites comprenant au moins une structure textile du type décrit précédemment.

Sous encore un autre aspect, l'invention a pour objet un procédé pour l'obtention de pièces composites par injection sous vide, avec ou sans pression, dans lequel on utilise un refort comprenant au moins une structure textile du type décrit précédemment.

La description qui suit sera faite en référence aux dessins annexés sur lesquels:

Fig. 1 représente schématiquement en coupe un empilement de trois couches de renfort textile, réalisé de manière connue;

Fig. 2 est une vue analogue à la figure 1 illustrant une structure textile selon l'invention;

Fig. 3 est un schéma d'un montage de moule à injection sous vide pour des essais de production de matériaux composites avec divers renforts textiles.

Fig. 4 représente schématiquement en coupe une variante de réalisation de la structure selon l'invention.

Fig. 5 représente schématiquement en coupe une autre variante de réalisation de la structure selon l'invention.

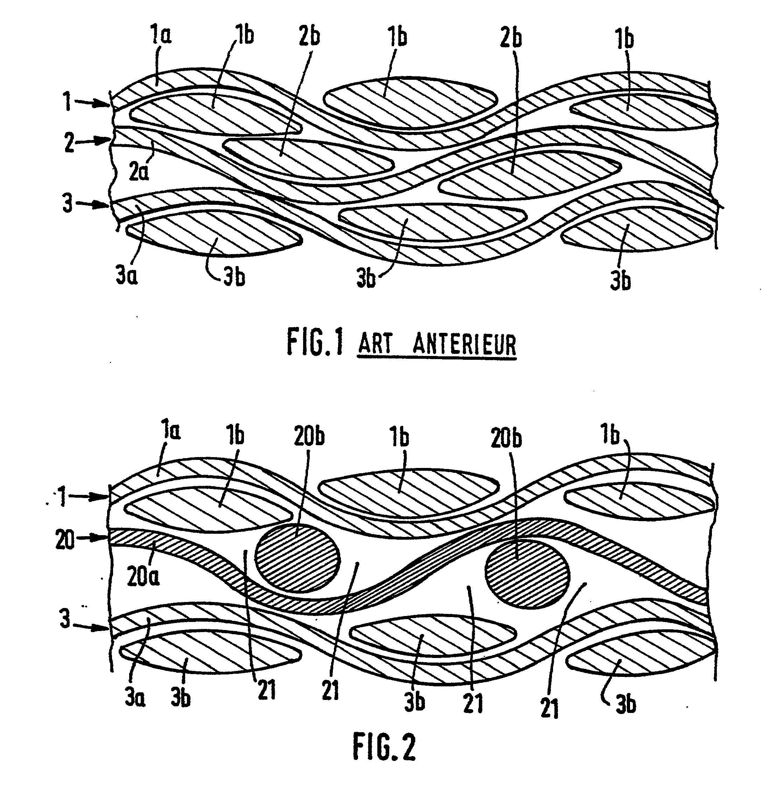

Comme l'illustre schématiquement la figure 1, un empilement classique de trois tissus, destiné à servir de renfort textile pour la fabri cation de matériaux composites, comporte un premier tissu (référence générale 1) avec fils de chaîne (ou de trame) 1a et fils de trame (ou de chaîne) 1b, un deuxième tissu analogue 2, formé de fils croisés 2a, 2b, et un troisième tissu 3 formé de fils croisés 3a, 3b. Dans l'empilement ainsi réalisé, les couches textiles se mettent en place en s'imbriquant l'une sur l'autre et constituent alors un obstacle à l'écoulement d'une résine injectée à l'état liquide à travers une telle structure.

La figure 2 illustre une structure textile selon l'invention comportant deux couches externes 1, 3 formées de tissus classiques à fils croisés respectivement 1a, 1b et 3a et 3b et une couche 20 médiane ou interne, comportant un croisement de fils 20a, 20b, où les fils 20b ont une géométrie permettant de former des canaux continus 21 dans le sens de l'écoulement de la résine.

Dans l'exemple illustré, les fils 20b sont juxtaposés, les canaux continus 21 étant ainsi créés à la périphérie de chacun de ces fils. Dans les variantes de réalisation, la couche 20 peut ne comporter que certains fils 21, qui sont alors séparés.

Egalement, le dessin n'a qu'un but d'illustration en montrant une seule couche 20, établie conformément à l'invention. Si besoin est, l'empilement peut comporter plusieurs couches de cette nature.

Le dessin de la figure 2 fait bien apparaître que la constitution des fils 20b peut être diverse, pour aboutir au résultat recherché, à savoir la formation des canaux 21. On a dit précédemment que, dans les modes de réalisation les plus avantageux, les fils 20b ont une surface externe hélicoïdale, ayant été tordus ou guipés avec au moins un fil additionnel. Mais des résultats équivalents peuvent être obtenus à partir de fils dont la forme ou la nature est telle que des canaux se forment au tour du fil.

On notera aussi que les dessins, par simplification, ont représenté un empilement de tissus, mais que d'autres variantes de réalisation peuvent être utilisées comme on l'a indiqué précédemment.

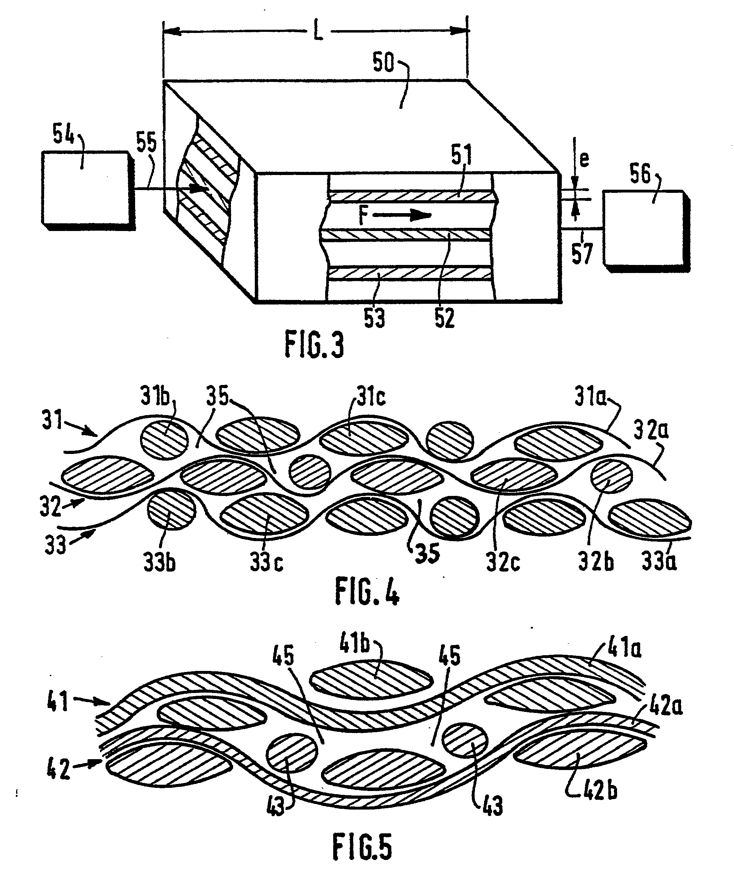

La figure 3 montre schématiquement un montage de moule par injection sous vide qui a été utilisé dans les essais rapportés ci-après. Il comprend un moule 50 contenant un empilement de trois couches 51, 52, 53 de renfort textile. D'un côté le moule est raccordé à des moyens connus 54 permettant d'injecter la résine en 55 et, de l'autre, à une source de vide 56 reliée en 57 au moule 50. La flèche F matérialise le sens d'écoulement de la résine. Lorsqu'on utilise une structure textile conforme à l'invention, les canaux de la ou des couches considérée(s) sont disposés dans le sens de la flèche F. La longueur du moule est désignée par L. Dans les essais qui suivent, cette longueur était de 85 cm, l'épaisseur $e$ de chaque couche de renfort textile était d'environ 5 cm, et la résine d'injection était une résine époxy classique (la même pour tous les essais). L'injection était faite sous vide en l'absence de pression.

La figure 4 représente schématiquement en coupe une structure textile selon l'invention, formée à partir de rubans unidirectionnels et convenant comme renfort pour la réalisation de ma tériaux composites par injection de résine. Cette structure comprend un empilement de trois rubans 31, 32, 33 dont on a représenté en traits fins les chaînes de liage respectives 31a, 32a, 33a, par exemple en polyester. Les éléments constitutifs des rubans sont représentés par les fils type 31b, 31c pour le ruban 31, les fils type 32b, 32c pour le ruban 32 et les fils type 33b, 33c pour le ruban 33. Une telle structure textile forme des canaux 35 entre les rubans empilés.

En variante, au lieu des rubans 31, 32, 33, on pourrait utiliser des nappes unidirectionnelles dans la structure textile de la figure 4, auquel cas les chaînes de liage 31a, 32a,, 33a seraient absentes.

La figure 5 représente une variante de structure textile selon l'invention dans laquelle des fils unitaires sont mis en place dans un empilement de couches en tissus classiques. La structure illustrée comporte deux couches 41, 42 constituées de tissus traditionnels comprenant respectivement des entrecroisements de fils 41a, 41b et 42a, 42b. Selon l'invention, des fils unitaires 43 sont disposés entre les tissus 41, 42, de sorte que des canaux 45 sont formés au voisinage de ces fils, dans l'empilement de deux tissus. Dans la variante illustrée schématiquement à la figure 5, les fils 43 sont mis en place in situ dans la structure textile, ce qui n'est pas le cas de la structure de la figure 2, par exemple, dans laquelle la couche 20 comprend un tissu préconstitué.

L'invention est applicable au moulage par injection de matériaux composites avec les résines les plus diverses, couramment utilisées pour ce genre d'application, à savoir, en particulier, des résines époxy, phénoliques, acryliques, bismaléimides, polyesters et autres. Les meilleurs résultats ont été obtenus avec des résines ne présentant pas lors de l'injection une viscosité trop élevée par exemple une viscosité ne dépassant pas 100 m Pa.s (millipascal/seconde). Toutefois ces indications n'ont rien de critique et l'homme du métier peut adapter le type de résine à la nature du matériau composite à fabriquer.

L'invention et les avantages qu'elle apporte seront encore illustrés par les exemples de réalisation donnés ci-après.

## EXEMPLE 1

### Essais avec matériau textile à base de fibres de verre

Dans ces essais, on a utilisé le montage de moule de la figure 3 dans les conditions suivantes:

(1) Trois couches de tissu de verre 300 g/m², chaque couche comportant des canaux, (structures selon l'invention)

(2) Deux couches externes de tissu de verre 300 g/m² traditionnel et ne comportant pas de canaux, Une couche centrale de tissu de verre 300 g/m² comportant des canaux (structure selon l'invention),

(3) Trois couches de tissu de verre 300 g/m² ne comportant pas de canaux (aucune structure selon l'invention).

Les types de tissus avaient la même armure: Sergé 2 lie 2.

La résine mise en oeuvre est la résine époxy XB3052A (avec durcisseur B) de Ciba-Geigy. La pression résiduelle dans le moule était de 5 millibars environ.

Les résultats obtenus sont rassemblés dans le tableau 1 qui suit. On a mesuré la longueur parcourue par la résine dans le moule (par rapport à la longueur L = 85 cm de celui-ci) en un temps donné.

## TABLEAU 1

| longueur d'écoulement (cm) | temps (min) |
|---|---|
| (1)  85 | 1,5 |
| (2)  45 | 1,5 |
| 85 | 2,5 |
| (3)  10 | 2 (blocage résine) |

## EXEMPLE 2

### Essais avec matériau textile à base de fibres de carbone 3000 filaments

Les essais ont été réalisés d'une manière similaire à l'Exemple 1, dans les conditions suivantes:

(1) Trois couches de tissu de carbone 195 g/m², chaque couche comportant des canaux.
(2) Deux couches externes de tissu de carbone 195 g/m² ne comportant pas de canaux.
Une couche centrale de tissu de carbone 195 mg/m² comportant des canaux.
(3) Trois couches de tissu de carbone 195g/m² ne comportant pas de canaux.

La résine mise en oeuvre était la résine époxy XB3052A (avec durcisseur B) de Ciba-Geigy.
La pression résiduelle dans le moule était de 5 millibars.
Les fibres de carbone étaient des fibres Toray à 3000 filaments.
En outre, les deux types de tissus sont fabriqués à partir de la même fibre de carbone et ont la même armure: taffetas.
Les résultats obtenus sont rassemblés dans le Tableau 2.

TABLEAU 2

| longueur d'écoulement | |
|---|---|
| (1) | 85 cm (en 6 minutes) |
| (2) | 60 cm (blocage résine) |
| (3) | 25 cm (blocage résine) |

Les essais des exemples 1 et 2 montrent à l'évidence les avantages de la présente invention tant en ce qui concerne la longueur d'écoulement de résine dans un temps donné que le temps d'injection pour une distance donnée.

Ces essais mettent en évidence également le fait que l'emploi d'une couche de tissu, comportant des canaux dans un empilement de couches, permet d'accroître très sensiblement la distance d'imprégnation.

Grâce à la mise en oeuvre de l'invention, on peut sensiblement augmenter les cadences de moulage et même réaliser des moulages par injection de matériaux composites à renforts textiles qui ne pouvaient pas être obtenus dans l'art antérieur, comme l'ont montré les essais comparatifs ci-dessus qui, pour certains, ont abouti à un blocage de la résine. Dans de tels cas, la pièce obtenue est défectueuse, ce qui peut occasionner des désordres très graves compte-tenu des applications de tels matériaux composites, par exemple das l'industrie aéronautique.

## EXEMPLE 3

On réalise un tissu conforme à l'invention ayant les caractéristiques suivantes:
- Largeur120 cm
- Armure de tissageSatin de 4
- Nature du fil
. chaînefils aramide 1267 Dtex non tordus
. tramefils aramide 1267 Dtex tordus à 80 t/m
- Masse surfacique175 ± 18 g/m²
- Contexture
. chaîne67 ± 3,5 fils/10 cm
. trame65 ± 3,5 coups/10 cm
- Epaisseur9,25 ± 0,03 mm

Un tel tissu présente donc dans le sens de sa trame des canaux continus, obtenus grâce à la torsion communiquée aux fils.

A partir d'un tel matériau, on réalise un empilement comportant dix nappes identiques ayant donc une épaisseur d'environ 2,5 mm, 2 m de longueur et 0,5 m de largeur.

Le moulage par injection sous vide d'un tel matériau s'effectue de manière aisée, l'imprégnation étant régulière et constante en allant de la périphérie au centre et ce, sur toute l'épaisseur de l'empilement.

## EXEMPLE 4

On réalise un tissu conforme à l'invention ayant les caractéristiques suivantes:
- Largeur120cm
- Armure du tissageSergé 2 lie 2
- Nature du fil
. chaînefils de verre 68 × 4 tordus à 150 t sens Z
. tramefils de verre 272 Tex tordus à 20t sens Z
- Masse surfacique300 ± 15 g/m²
- Contexture
. chaîne56 ± 3,0 fils/10 cm
. trame52 ± 3,0 coups/10 cm
- Epaisseur0,36 ± 0,04 mm

Un tel tissu présente donc, dans le sens de sa chaîne, des canaux continus, obtenus grâce à la torsion comuniquée aux fils de chaîne.

Comme dans l'exemple 3, à partir d'un tel matériau, on réalise un empilement comportant dix nappes identiques, ce renfort ayant donc une épaisseur d'environ 3,6 mm, sa longueur et sa largeur étant les mêmes que dans l'exemple précédent.

Le moulage par injection sous vide d'un tel matériau s'effectue également de manière aisée, l'imprégnation étant régulière et constante en allant de la périphérie au centre et ce, sur toute l'épaisseur de l'empilement.

EXEMPLE 5

On réalise un tissu conforme à l'invention ayant les caractéristiques suivantes:
- Largeur 100 cm
- Armure du tissage taffetas
- Nature du fil
. chaîne fils de carbone 3K non tordus
. trame alternance d'un fil de carbone non tordu avec un fil de carbone 3K guipé avec un fil de polyester à raison de 260 t/m
- Poids moyen 195 ± 8 g/cm²
- Contexture
. chaîne 4,9 ± 2 fils/cm
. trame 1) 2,4 ± 2 fils/cm de fil de carbone non guipé
2) 2,4 ± 2 fils/cm de fil de carbone guipé

Un tel tissu présente donc, dans le sens de sa trame (sens travers) des canaux continus, s'étendant autour des fils guipés dans l'espace compris entre les fils de trame non guipés et les fils guipés.

Comme dans les exemples précédents, il est possible à partir d'un tel matériau, de réaliser un renfort textile comportant un grand nombre de nappes superposées, le moulage par injection sous vide étant également effectué de manière aisée avec une imprégnation régulière et constante.

Les renforts textiles de forte ·épaisseur constitués d'une pluralité de nappes d'un tel matériau sont également facilement moulables par injection sous vide.

Les exemples qui précèdent montrent bien les avantages apportés par l'invention, notamment le fait qu'il est possible de réaliser une impré gnation parfaite selon la technique d'injection sous vide et ce, même avec une forte teneur en matériau textile de renforcement.

Par ailleurs, si, dans certains des exemples précédents, toutes les couches de l'empilement étaient réalisées à partir d'une structure comportant des canaux, il a été également constaté qu'il suffisait qu'une seule de ces couches, disposée dans la zone centrale de l'empilement, soit réalisée à partir d'une structure conforme à l'invention, toutes les autres couches disposées de part et d'autre de cette couche intermédiaire pouvant être à base d'une structure textile ne comportant pas une telle caractéristique, pour que l'on obtienne également une très bonne répartition de la résine sur toute la largeur et épaisseur dudit empilement.

A titre comparatif, des essais similaires réalisés à partir de tissus ayant les mêmes contextures et les mêmes armatures que celles des exemples 3 à 5 précédents, mais dans lesquels aucun des fils n'avait reçu de torsion ou n'avait été guipé, ont montré qu'en procédant de la même manière par injection sous vide pour un empilement formé d'un même nombre de couches, et ce sur un panneau ayant les mêmes dimensions, la pénétration de la résine à l'intérieur du panneau était bloquée très rapidement et n'arrivait pas jusqu'au centre.

Grâce à l'invention, il est donc possible d'obtenir au moyen d'une technique d'injection très simple et très fiable, des matériaux présentant des taux de renfort textile très importants, impossible à obtenir à ce jour par une technique d'injection similaire et qui ne pouvaient être réalisés que par l'intermédiaire de technologies chères et complexes, telles que celles faisant appel à des autoclaves.

Grâce à l'invention, il est donc possible par la combinaison du procédé d'injection sous vide et/ou sous pression et l'utilisation des structures de renforcement, dont au moins une des couches comporte des canaux, d'obtenir des pièces stratifiées (composites) présentant des caractéristiques techniques avantageuses et ce, avec:
- un niveau d'investissement faible,
- une vitesse de production élevée et très modulable,
- la possiblité de réaliser des pièces de grandes tailles.

Ainsi, la structure textile objet de la présente invention,mise en oeuvre par injection de résine et donnant des pièces à fortes caractéristiques mécaniques, apporte les avantages suivants:

(1) elle permet, par utilisation du vide seul, de réaliser des pièces de grandes tailles et tout particulièrement avec des fibres de hautes performances type carbone, en substitution de pièces unitaires moulées au contact.

(2) elle permet, par utilisation de vide et pression:

- sur les renforts de grande diffusion (type verre) d'augmenter les cadences, la fiabilité et la reproductibilité,
- sur les renforts hautes performances, d'utiliser des résines plus performantes d'un point de vue mécanique et thermique et/ou plus réactives.

Les avantages sont encore plus marqués dans le cas de pièces de structure fortement ani sotrope.

Bien entendu, l'invention n'est pas limitée aux exemples donnés précédemment mais elle couvre toutes les variantes réalisées dans le même esprit: par exemple, la structure textile de renforcement pourrait être à base de tout autre matériau que ceux utilisés dans les exemples donnés et les armatures des tissues également être adaptées.

Dans la description qui précède, il a été surtout question de structures textiles comprenant des fils qui, grâce à leur contexture ou à leur disposition au sein de la structure, forment des canaux dans l'empilement servant de renfort textile. Mais il va sans dire que des résultats équivalents peuvent être obtenus avec des composants textiles autres que des fils, par exemple des composants, tels que des joncs ou des fils hybrides, capables de former aussi des canaux dans l'empilement.

On notera aussi que, pendant l'injection de résine et la fabrication du matériau composite, les canaux sont conservés intégralement jusqu'à imprégnation totale du renfort par la résine. Une fois la pièce fabriquée, les canaux peuvent se maintenir en l'état ou, dans d'autres cas, ne plus apparaître en tant que tels dans la pièce finale. Selon la caractéristique essentielle de l'invention, de tels canaux sont présents au sein du renfort textile lors du processus d'injection.

Ainsi, l'invention permet d'obtenir des structures très diverses qui, toutes entrent dans son cadre. On comprendra aussi que l'homme du métier peut apporter des modifications aux composants susceptibles de former les canaux dans l'empilement sans pour autant sortir du cadre de l'invention revendiquée.

Les signes de référence insérés après les caractéristiques techniques mentionnées dans les revendications, ont pour seul but de faciliter la compréhension de ces dernières, et n'en limitent aucunement la portée.

**Revendications**

1. Procédé pour l'obtention d'articles composites par la technique de moulage par injection dans lequel on dispose dans un moule de forme correspondant à celle de l'article à obtenir, un empilement de couches de renforts textiles à base de fibres techniques telles que verre, carbone, carbure de silicium, aramide, bore et autres, et après fermeture du moule, on y injecte une résine dans au moins une direction, procédé dans lequel on utilise un empilement de couches ne comportant pas d'autre(s) couche(s) que celle(s) destinée(s) au renfort, au moins une desdites couches de renfort ayant une structure telle qu'au moins dans unes des ses directions correspondant à celle de l'injection de la résine, elle forme des canaux (21, 35, 45), facilitant l'écoulement de la résine lors de l'injection.

2. Procédé selon la revendication 1 dans lequel les canaux sont continus.

3. Procédé selon l'une des revendications 1 ou 2, dans lequel les canaux sont formés dans l'épaisseur de la couche de renfort ainsi que sur chacune de ses faces, ce qui permet l'imprégnation d'une ou plusieurs couches adjacentes (1, 3) de l'empilement.

4. Procédé selon l'une quelconque des revendications 1 à 3, dans lequel les canaux sont juxtaposés les uns aux autres sur toute la largeur de l'article.

5. Procédé selon l'une quelconque des revendications 1 à 3, dans lequel les canaux ne sont pas juxtaposés et sont séparés les uns des autres.

6. Procédé selon l'une quelconque des revendications 1 à 5, dans lequel les canaux sont rectilignes ou sensiblement rectilignes.

7. Procédé selon l'une quelconque des revendications 1 à 5, dans lequel les canaux sont courbés et épousent la forme de l'article final à obtenir.

8. Procédé selon l'une quelconque des revendications 1 à 7, dans lequel les canaux sont sensiblement parallèles entre eux.

9. Procédé selon l'une quelconque des revendications 1 à 7, dans lequel les canaux ne sont pas parallèles entre eux.

10. Structure textile pour la mise en œuvre du procédé selon l'une des revendications 1 à 9, dans laquelle au moins une des couches de l'empilement de renforts textiles est réalisée à partir d'un tissu chaîne et trame dans lequel au moins une partie des fils de chaîne et/ou de trame ont reçu une torsion, auquel cas, une fois la couche (20) mise en place dans l'empilement (1, 20, 3), lesdits fils forment des canaux parallèles (21).

11. Structure textile pour la mise en œuvre du procédé selon l'une des revendications 1 à 9, dans laquelle au moins une des couches de l'empilement de renforts textiles est réalisée à partir d'un tissu chaîne et trame dans lequel au moins une partie des fils de chaîne et/ou de trame ont été guipés avec au moins un fil additionnel ou avec une tresse, auquel cas, une fois la couche (20) mise place dans l'empilement (1, 20, 3), lesdits fils forment des canaux parallèles (21).

12. Structure textile pour la mise en œuvre du procédé selon l'une des revendications 1 à 9, dans laquelle au moins une des couches de l'empilement de renforts textiles est réalisée à partir d'un tissu chaîne et trame dans lequel au moins une partie des fils de chaîne et/ou de trame ont une forme telle qu'une fois la couche (20) mise en place dans l'empilement (1, 20, 3), des canaux (21) sont formés autour desdits fils.

13. Structure textile selon la revendication 12, dans laquelle les fils sont prévus en tant que tels ou sont polymérisés, préimprégnés ou hybrides.

14. Structure textile pour la mise en œuvre du procédé selon l'une des revendications 1 à 9, dans laquelle au moins une des couches de l'empilement de renforts textiles comprend une structure plane monocouche tissée, avec ou sans embuvage, tricot, ruban ou nappe non tissée unidirectionnelle ou multidirectionnelle, ou une structure plane multicouches épaisse ou une structure non plane, ayant une forme adaptée à l'article final à fabriquer, de nature monocouche ou multicouches, ladite structure présentant des passages préférentiels formant des canaux (35) dans l'empilement (31, 32, 33).

15. Structure textile de renforcement pour la mise en œuvre du procédé selon l'une des revendications 1 à 9, dans laquelle des fils unitaires (43) sont disposés entre les couches (41, 42) de l'empilement, ces fils créants des passages préférentiels formant des canaux (45), lesquels favorisent l'écoulement de la résine lors de l'injection.

16. Tissu chaîne et trame tel qu'utilisé pour la réalisation d'une structure textile selon l'une quelconque des revendications 10 à 15, caractérisé en ce qu'au moins une partie des fils de chaîne et/ou de trame ont reçu une torsion.

17. Tissu chaîne et trame tel qu'utilisé pour la réalisation d'une structure textile selon l'une quelconque des revendications 10 à 15, caractérisé en ce qu'au moins une partie des fils de chaîne et/ou de trame ont été guipés avec au moins un fil additionnel.

18. Tissu chaîne et trame selon l'une des revendications 16 ou 17, caractérisé en ce que tous les fils de chaîne ou tous les fils de trame ont reçu une torsion ou ont été guipés.

19. Structure, plane monocouche tissée, avec ou sans embuvage, tricot, ruban, ou nappe non tissée unidirectionnelle ou multidirectionnelle, structure plane multicouches épaisse ou structure non plane, ayant une forme adaptée à l'article final à fabriquer, de nature monocouche ou multicouche, telle qu'utilisée pour la réalisation d'une structure textile selon la revendication 15.

## Claims

1. A method for producing composite articles by means of the injection molding technique, which involves arranging a stack of layers of textile reinforcements made of technical fibers such as glass, carbon, silicium carbide, aramide, boron and the like, in a mold of a shape corresponding to that of the article to be obtained, and, after the mold has been closed, injecting a resin into it in at least one direction, wherein said stack of layers does not comprise layer(s) other(s) than the one(s) for the reinforcement, at least one of said reinforcing layers having such a structure that, at least in one of its directions corresponding to the one of the resin injection, it forms ducts (21, 35, 45) facilitating the flow of the resin during injection.

2. A method as claimed in claim 1, wherein the ducts are continuous.

3. A method as claimed in one of claims 1 or 2, wherein the ducts are made in the thickness of the reinforcing layer and on each of its faces, thus making it possible to impregnate one or more adjacent layers (1, 3) of the stack.

4. A method as claimed in any one of claims 1 to 3, wherein the ducts are placed next to one another over the entire width of the article.

5. A method as claimed in any one of claims 1 to 3, wherein the ducts are not placed next to one another and are separated from one another.

6. A method as claimed in any one of claims 1 to 5, wherein the ducts are in a straight or substantially straight line.

7. A method as claimed in any one of claims 1 to 5, wherein the ducts are curved according to the shape of the final article to be produced.

8. A method as claimed in any one of claims 1 to 7, wherein the ducts are substantially parallel to one another.

9. A method as claimed in any one of claims 1 to 7, wherein the ducts are not parallel to one another.

10. A textile material for carrying out the method as claimed in one of claims 1 to 9 wherein at least one layer of the stack of textile reinforcements is made from a warp and weft fabric, in which at least some of the warp and/or weft threads have undergone twisting, in which case once said layer (20) has been put in place in the stack (1, 20, 3), the said threads form parallel ducts (21).

11. A textile material for carrying out the method as claimed in one of claims 1 to 9, wherein at least one layer of the stack of textile reinforcements is made from a warp and weft fabric, in which at least some of the warp and/or weft threads have been covered with at least an additional thread or with a plait, in which case, once the layer (20) has been put in place in the stack (1, 20, 3) the said threads form parallel ducts (21).

12. A textile material for carrying out the method as claimed in one of claims 1 to 9, wherein at least one layer of the stack of textile reinforcements is made from a warp and weft fabric, in which at least some of the warp and/or weft threads have such a shape that, once the layer (20) has been put in place in the stack (1, 20, 3), ducts (21) are formed round the said threads.

13. A textile material as claimed in claim 12, wherein the threads are present as such or are polymerized, preimpregnated or hydrids threads.

14. A textile material for carrying out the method as claimed in one of claims 1 to 9, wherein at least one layer of the stack of textile reinforcements comprises a weaved plane monolayer structure, with or without shrinking of the warp, knitted or cliver type structure, or a non-woven unidirectional or multidirectional lap or web structure, or a plane thick multilayer structure, or a non-plane structure of the monolayer or multilayer type, the shape of which corresponds to that of the final article to be produced, said structure having preferred passages forming ducts (35) in the stack (31, 32, 33).

15. A textile material for carrying out the method as claimed in one of claims 1 to 9 wherein unit threads (43) are arranged between the layers (41, 42) of the stack, these threads providing preferred passages forming ducts (45) which improve the flow of the resin during injection.

16. A warp and weft fabric, as used for producing a textile material as claimed in any one of claims 10 to 15, wherein at least some of the warp and/or weft threads have undergone twisting.

17. A warp and weft fabric, as used for producing a textile material as claimed in any one of claims 10 to 15, wherein at least some of the warp and/or weft threads have been covered with at least an additional thread.

18. A warp and weft fabric as claimed in either one of claims 16 or 17, wherein all the warp threads or all the weft threads have undergone twisting or have been covered.

19. Weaved plane monolayer structure, with or without shrinking of the warp, knitted or cliver type structure, or non-woven unidirectional or multidirectional lap or web textile structure, plane thick multilayer textile structure, or non-plane textile structure of the monolayer or multilayer type, the shape of which corresponds to that of the final article to be produced, said structure being such as used for making a textile material as claimed in claim 15.


**Patentansprüche**

1. Verfahren zur Herstellung von Verbunderzeugnissen durch Spritzgußtechnik, in dem man in einer Form mit der Gestalt entsprechend derjenigen des zu erzielenden Erzeugnisses einen Stapel textiler Verstärkungsschichten auf Basis von technischen Fasern wie Glas, Kohlenstoff, Siliciumcarbid, Aramid, Bor und anderen vorsieht und nach Schließen der Form ein Harz in wenigstens einer Richtung einspritzt, wobei man bei diesem Verfahren einen Stapel von Schichten verwendet, die keine andere(n) Schicht(en) wie diejenige(n), die zur Verstärkung bestimmt ist (sind), enthält (enthalten), wobei mindestens eine der Verstärkungsschichten eine derartige Struktur hat, daß mindestens in einer ihrer Richtungen entsprechend derjenigen des Einspritzens des Harzes, Kanäle (21, 35, 45) gebildet werden, welche das Abfließen des Harzes während des Einspritzens erleichtern.

2. Verfahren gemäß Anspruch 1, dadurch gekennzeichnet, daß die Kanäle kontinuierlich sind.

3. Verfahren gemäß einem der Ansprüche 1 oder 2, dadurch gekennzeichnet, daß die Kanäle in der Dicke der Verstärkungsschicht sowie auf jeder ihrer Seiten gebildet sind, was die Imprägnierung einer oder mehrerer benachbarter Schichten (1, 3) des Stapels ermöglicht.

4. Verfahren gemäß einem der Ansprüche 1 bis 3, dadurch gekennzeichnet, daß die Kanäle über die ganze Breite des Erzeugnisses nebeneinander gelegen sind.

5. Verfahren gemäß einem der Ansprüche 1 bis 3, dadurch gekennzeichnet, daß die Kanäle nicht nebeneinanderliegend sind und voneinander getrennt sind.

6. Verfahren gemäß einem der Ansprüche 1 bis 5, dadurch gekennzeichnet, daß die Kanäle geradlinig oder im wesentlichen geradlinig sind.

7. Verfahren gemäß einem der Ansprüche 1 bis 5, dadurch gekennzeichnet, daß die Kanäle gekrümmt sind und sich an die Form des zu erzielenden Enderzeugnisses anpassen.

8. Verfahren gemäß einem der Ansprüche 1 bis 7, dadurch gekennzeichnet, daß die Kanäle untereinander im wesentlichen parallel sind.

9. Verfahren gemäß einem der Ansprüche 1 bis 7, dadurch gekennzeichnet, daß die Kanäle untereinander nicht parallel sind.

10. Textilstruktur zur Durchführung des Verfahrens gemäß einem der Ansprüche 1 bis 9, dadurch gekennzeichnet, daß wenigstens eine der Schichten des Stapels der Textilverstärkungen, ausgehend von einem Gewebe mit Kette und Schuß, hergestellt wird, wobei wenigstens ein Teil der Kettfäden und/oder Schußfäden eine Drehung erhalten haben, in welchem Falle, wenn die Schicht (20) einmal in dem Stapel (1, 20, 3) plaziert ist, diese Fäden parallele Kanäle (21) bilden.

11. Textilstruktur zur Durchführung des Verfahrens gemäß einem der Ansprüche 1 bis 9, dadurch gekennzeichnet, daß wenigstens eine der Schichten des Stapels der Textilverstärkungen, ausgehend von einem Kett-Schußgewebe, hergestellt wird, worin wenigstens ein Teil der Kett- und/oder Schußfäden mit mindestens einem zusätzlichen Faden oder mit einem Geflecht umsponnen wurden, in welchem Falle, wenn die Schicht (20) einmal in dem Stapel (1, 20, 3) plaziert wurde, diese Fäden parallele Kanäle (21) bilden.

12. Textilstruktur zur Durchführung des Verfahrens gemäß einem der Ansprüche 1 bis 9, dadurch gekennzeichnet, daß wenigstens eine der Schichten des Stapels der Textilverstärkungen gebildet wird, ausgehend von einem Kett-Schußgewebe, worin wenigstens ein Teil der Kett- und/oder Schußfäden eine solche Form haben, daß, wenn die Schicht (20) einmal in dem Stapel (1, 20, 3) plaziert ist, Kanäle (21) um diese Fäden herum gebildet werden.

13. Textilstruktur gemäß Anspruch 12, dadurch gekennzeichnet, daß die Fäden als solche vorgesehen sind oder polymerisiert, vorimprägniert oder Hybride sind.

14. Textilstruktur zur Durchführung des Verfahrens gemäß einem der Ansprüche 1 bis 9, dadurch gekennzeichnet, daß mindestens eine der Schichten des Stapels der Textilverstärkungen eine gewebte, einschichtige, plane Struktur mit oder ohne Schrumpfung, Trikot, Band oder nicht gewebtes Vlies in einer Richtung oder mehr Richtungen umfaßt, oder eine dichte, vielschichtige, plane Struktur oder eine nicht ebene Struktur mit einer dem zu erzeugenden Enderzeugnis angepaßten Form, einschichtig oder mehrschichtig; umfaßt, wobei diese Struktur bevorzugte Durchgänge aufweist, die Kanäle (35) in dem Stapel (31, 32, 33) bilden.

15. Verstärkungstextilstruktur zur Durchführung des Verfahrens gemäß einem der Ansprüche 1 bis 9, dadurch gekennzeichnet, daß Einzelfäden (43) zwischen den Schichten (41, 42) des Stapels angeordnet sind, wobei diese Fäden bevorzugte Durchgänge schaffen, welche Kanäle (45) bilden, die das Abfließen des Harzes während des Einspritzens begünstigen.

16. Kett- und Schußgewebe, wie es zur Herstellung einer Textilstruktur gemäß einem der Ansprüche 10 bis 15 verwendet wird, dadurch gekennzeichnet, daß mindestens ein Teil der Kett- und/oder Schußfäden eine Drehung erhalten haben.

17. Kett- und Schußgewebe, wie es zur Herstellung einer Textilstruktur gemäß einem der Ansprüche 10 bis 15 verwendet wird, dadurch gekennzeichnet, daß mindestens ein Teil der Kett- und/oder Schußfäden mit mindestens einem zusätzlichen Faden umsponnen wurde.

18. Kett- und Schußgewebe gemäß einem der Ansprüche 16 oder 17, dadurch gekennzeichnet, daß alle Kettfäden oder alle Schußfäden eine Drehung erhielten oder umsponnen wurden.

19. Ebene, einschichtige gewebte Struktur mit oder ohne Schrumpfung, Trikot, Band oder nicht gewebtes Vlies in einer Richtung oder mehreren Richtungen, dichte, vielschichtige ebene Struktur oder nicht ebene Struktur, mit einer Form, angepaßt an das zu erzeugende Enderzeugnis, einschichtig oder mehrschichtig, wie sie zur Herstellung einer Textilstruktur gemäß Anspruch 15 verwendet wird.

FIG.1 ART ANTERIEUR

FIG.2

FIG.3

FIG.4

FIG.5